# EUROPEAN PATENT APPLICATION

(11) **EP 2 709 095 A1**
(43) Date of publication of application: **19.03.2014**
(21) Application number: 12782327.6
(22) Date of filing: 07.05.2012
(51) Int. Cl.: G09G 3/36, G09G 3/20

(54) **LIQUID CRYSTAL DISPLAY DEVICE**

(30) Priority: 11.05.2011 JP 2011106639
(71) Applicant: Kyocera Display Corporation, Shiga, 5202362 (JP)
(72) Inventor: GONDO, Kenji, Tokyo 116-0014 (JP)
(74) Representative: Müller-Boré & Partner Patentanwälte PartG mbB
(86) International application number: PCT/JP2012/061684
(87) International publication number: WO 2012/153711

(57) **Abstract**

Each of a plurality of liquid crystal display panels includes a gate driver for line-sequentially selecting respective gate lines and a source driver for setting the potentials of respective source lines. The plurality of liquid crystal display panels include a single timing controller for controlling the respective gate drivers and the respective source drivers corresponding to the plurality of liquid crystal display panels.

## Description

### TECHNICAL FIELD

The present invention relates to a liquid crystal display device, in particular, a liquid crystal display device including a plurality of liquid crystal display panels disposed in a row in one direction to display an image.

### BACKGROUND ART

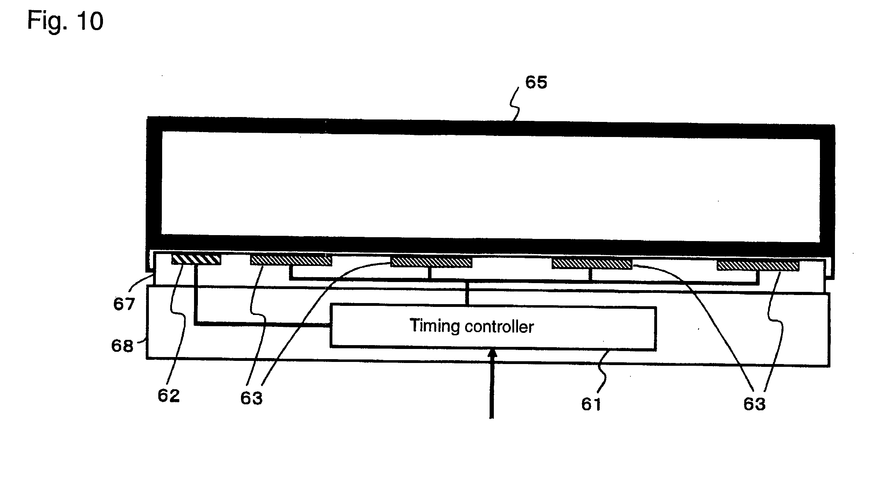

Fig. 10 is a block diagram showing a configuration example of a liquid crystal display device which utilizes a plurality of source drivers to drive a single liquid crystal display panel. In the example shown in Fig. 10, a timing controller 61 controls a gate driver 62 and the plurality of source drivers 63 to display an image on the liquid crystal display panel 65. Fig. 10 shows a case where the gate driver 62 and the plurality of source drivers 63 are disposed on a substrate 67 while the timing controller 61 is disposed on a substrate 68.

As the connection method between a plurality of source drivers and a timing controller for inputting control signals or other signals to the respective source drivers, there have been known a point-to-point system (see, e.g. Non-Patent Document 1). In the point-to-point system, the source drivers are connected to a timing controller, utilizing different signal lines for the respective source drivers.

### PRIOR ART DOCUMENT

### NON-PATENT DOCUMENT

Non-Patent Document 1: New Technology for Liquid Crystal Source/Driver IC For Large Liquid Crystal Televisions Having a Full HD Size "PPmL (registered trademark)" [online], Renesas Electronics Corporation, [Search on February 18, 2011], Internet<URL:http://www2.renesas.com/display/ja/sp_ppml.html>

### DISCLOSURE OF INVENTION

### TECHNICAL PROBLEM

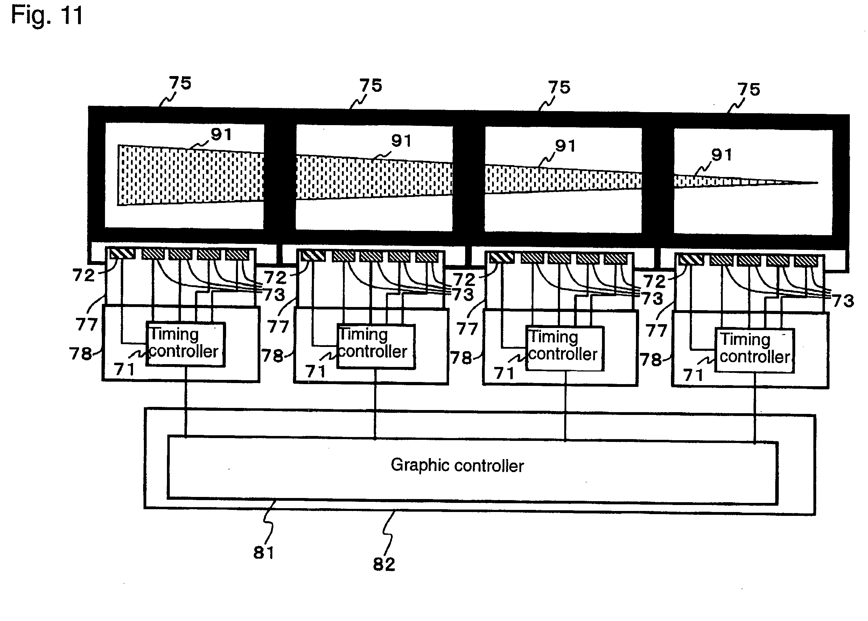

When an attempt is made to realize a liquid crystal display device including a plurality of liquid crystal display panels disposed in a row in a lateral direction to display an image on the respective crystal display panels, one possible solution is to provide a configuration shown in Fig. 11. Fig. 11 is a block diagram showing a general configuration example of a liquid crystal display device including a plurality of liquid crystal display panels disposed in a row in a lateral direction.

In the example shown in Fig. 11, the liquid crystal display device includes four liquid crystal display panels disposed in a row in a lateral direction. A timing controller 71, a gate driver 72 and a plurality of source drivers 73 are disposed for each of the liquid crystal display panels 75. In the shown example, it is shown that four source drivers 73 are disposed for each of the liquid crystal display panels 75. In Fig. 11, it is shown that the gate driver 2 and the four source drivers 73 for each of the liquid crystal display panels 75 are disposed on each substrate 77 while the timing controller 71 is disposed on each substrate 78.

The respective timing controllers 71 are connected to their corresponding source drivers 73 by a point-to-point system.

The timing controllers 71 are connected to a graphic controller 81. The graphic controller 81 is disposed on a substrate 82. The graphic controller 81 generates the image data representing an image to be displayed on the respective liquid crystal display panels 75 and supplies the image data to the respective timing controllers 71. The respective timing controllers 71 input control signals, image data or other signals into the respective gate drivers 72 and the respective source drivers 73 to display the image on the liquid crystal display panels 75 by means of the respective gate drivers 72 and the respective source drivers 73. In Fig. 11, it is shown that the graphic controller 81 divides an image showing a displayed object 91 so as to display the respective divided images on the four liquid crystal display panels 75. A user can grasp the entire image showing the displayed object 91 by watching the four liquid crystal display panels 75.

In the case of a general configuration shown in Fig. 11, the production cost of the liquid crystal display device is expensive because the provision of the timing controllers 71 for the respective liquid crystal display panels 75 increases the number of the timing controllers 71. For example, when n liquid crystal display panels 75 are disposed, n timing controllers 71 are accordingly required, increasing the production cost.

Further, it has been difficult to synchronize the liquid crystal display panels 75 since the respective timing controllers 71 independently control the gate drivers 72 and the plurality of source drivers 73, resulting the drivers to be out of synchronization.

It is an object of the present invention to provide a liquid crystal display device which includes a plurality of liquid crystal display panels disposed in a row in one direction and which is capable of reducing the production cost and of establishing synchronization among combinations of a liquid crystal display panel, a gate driver and source drivers.

### SOLUTION TO PROBLEM

The liquid crystal display device includes a plurality of liquid crystal display panels including source lines disposed along columns of pixels arranged in a matrix pattern and gate lines disposed along rows of the pixels arranged in the matrix pattern; the plurality of liquid crystal display panels being disposed in a row in one direction; each of the liquid crystal display panels including a gate driver for selecting respective gate lines and at least one source driver for setting the potentials of the respective source lines; and a single timing controller for controlling the respective gate drivers and the respective source drivers corresponding to the plurality of liquid crystal display panels.

The timing controller may be connected to the respective source drivers via independent signal lines.

The plurality of liquid crystal display panels may be configured so as to be disposed such that the angle formed by adjacent liquid crystal display panels is less than 180 degrees.

Each of the liquid crystal display panels may include a single source driver.

The gate driver disposed for each of the liquid crystal display panels may be configured as a built-in gate driver, which is disposed in each of the liquid crystal display panels and which includes a shift register and an output switch.

### ADVANTAGEOUS EFFECTS OF INVENTION

In accordance with the present invention, it is possible not only to reduce the production cost of a liquid crystal display device including a plurality of liquid crystal display panels disposed in a row in one direction but also to synchronize operation among combinations of a liquid crystal display panel, its gate driver and its source driver or source drivers.

### BRIEF DESCRIPTION OF DRAWINGS

Fig. 1 is a block diagram showing a configuration example of the liquid crystal display device according to an embodiment of the present invention.
Fig. 2 is an explanatory diagram showing a connection example among a pixel electrode, a TFT, a source line and a gate line in the embodiment of the present invention.
Fig. 3 is a timing chart showing an example of the input timing of signals from a timing controller to a gate driver and a source driver in the embodiment of the present invention.
Fig. 4 is a timing chart showing details of the input timing of STH and CLK to a source driver in the embodiment of the present invention.
Fig. 5 is a schematic diagram showing an example of timing that image data is captured by the source drivers in the embodiment of the present invention.
Fig. 6 is a top plan view showing a plurality of liquid crystal display panels in a case where the liquid crystal display panels are disposed such that the angle formed by the display screens of adjacent liquid crystal display panels is less than 180 degrees in the embodiment of the present invention.
Fig. 7 is a block diagram showing a preferred configuration example in a case where the liquid crystal display panels are disposed such that the angle formed by the display screens of adjacent liquid crystal display panels is less than 180 degrees in the embodiment of the present invention.
Fig. 8 is a schematic diagram showing a configuration example of a case where panel-built-in gate drivers are employed in an embodiment of the present invention.
Fig. 9 is a schematic diagram showing a configuration example of a built-in gate driver in the embodiment of the present invention.
Fig. 10 is a block diagram showing a general configuration example of a liquid crystal display device which employs a plurality of source drivers to drive a single liquid crystal display panel in an embodiment of the present invention.
Fig. 11 is a block diagram showing a general configuration example of a liquid crystal display device including a plurality of liquid crystal display panels disposed in a row in a lateral direction.

### DESCRIPTION OF EMBODIMENTS

Now, embodiments of the present invention will be described in reference to the accompanying drawings.

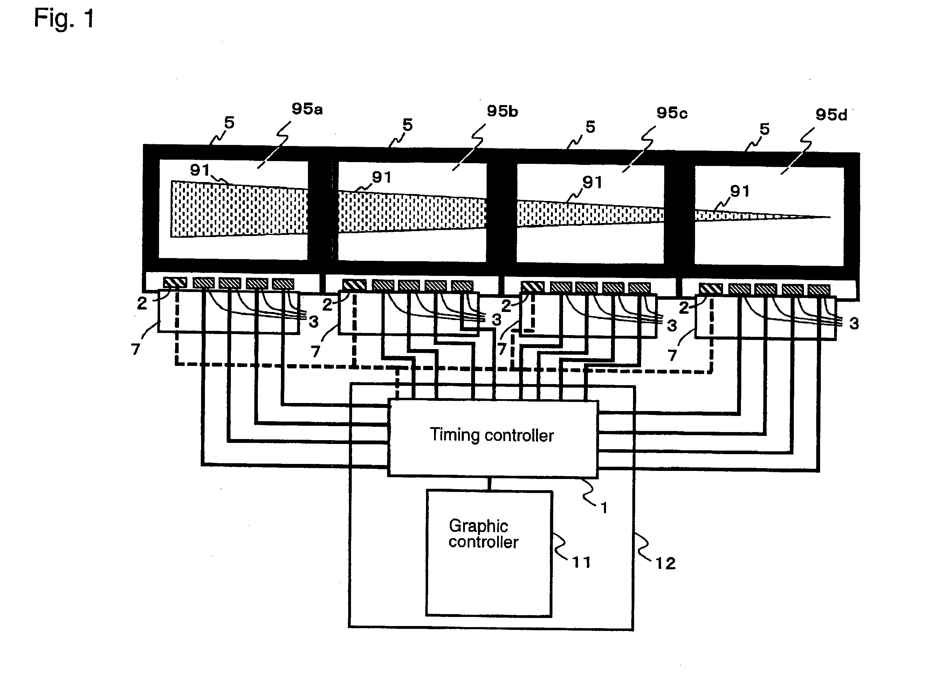

Fig. 1 is a block diagram showing a configuration example of a liquid crystal display device according to the present invention. The liquid crystal display device according to an embodiment of the present invention includes a plurality of liquid crystal display panels 5 disposed in a row in one direction. Although Fig. 1 shows a case where the liquid crystal display device includes four liquid crystal display panels 5 disposed in a row, the number of the liquid crystal display panels 5 may be plural and is not limited to four.

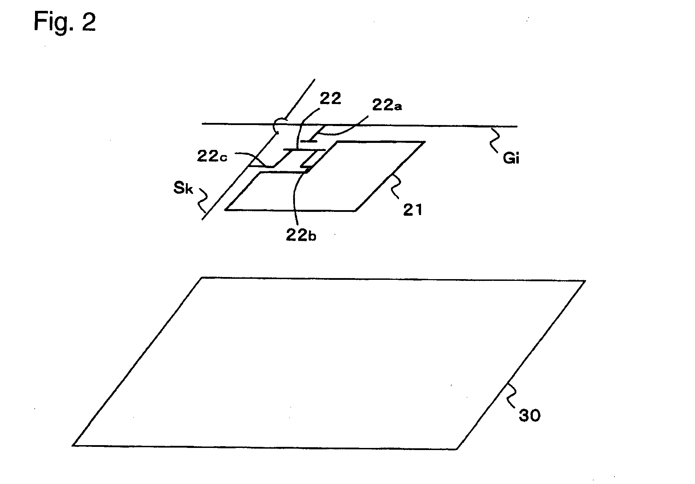

Explanation will be made about a case where each of the liquid crystal display panels 5 is a liquid crystal display panel employing TFTs (Thin Film Transistors). Each of the liquid crystal display panels 5 includes a source line for each column of pixel electrodes disposed in a matrix pattern and a gate line for each row of the pixel electrodes. Each pixel electrode includes a TFT. Each pixel electrode is connected to its own TFT, which is connected to a source line and a gate line. The source lines are disposed along the respective columns of the pixel electrodes while the gate lines are disposed along the respective rows of the pixel electrodes. Fig. 2 is an explanatory diagram showing a connection example among a pixel electrode, a TFT, a source line and a gate line in the embodiment of the present invention. Fig. 2 shows a pixel electrode which is disposed in the i-th row and the k-th column and connected to the gate line Gᵢ in the i-th row and the source line Sₖ in the k-th column among the plural pixel electrode disposed in a matrix pattern. The pixel electrode 21 is connected to the drain 22_{b} of the TFT 22. The gate 22ₐ of the TFT 22 is connected to the gate line Gᵢ, and the source 22_{c} of the TFT 22 is connected to the source line Sₖ. A combination of the pixel electrode 21 and the TFT 22 corresponds to one pixel. Although Fig. 2 shows only one pixel electrode, this connection configuration is also applied to the connection configuration of the TFT, the gate line and the source line in each of the other pixel electrodes.

In each of the liquid crystal display panels 5, the respective gate lines are line-sequentially selected such that a selected gate line is set at a selected-period potential, and the non-selected gate lines are set at a non-selected-period potential. When a gate line is selected, the respective source lines are set at potentials according to the image data of the row of the selected gate line. In the TFT 22 disposed in each of the pixel electrodes, when the gate 22ₐ is set at the selected-period potential, conduction is established between the drain 22_{b} and the source 22_{c}. When the gate 22ₐ is set at the non-selected-period potential, no conduction is established between the drain 22_{b} and the source 22_{c}. Thus, the respective pixel electrodes of a selected row are set at potentials according to the image data of that row. The respective liquid crystal display panels 5 include a common electrode 30 opposed thereto through a liquid crystal (not shown). The potential of the common electrode is controlled as to be set at a predetermined level with the result that voltages are applied across respective portions of the liquid crystal in a selected row according to the image data of that row.

In some parts of the following explanation, it should be noted that the selected period potential is referred to as VGH while the non-selected period potential is referred to as VGL.

Further, the liquid crystal display device according to this embodiment includes a gate driver 2 and a plurality of source drivers 3 for each of the liquid crystal display panels 5. Although Fig. 1 shows a case where a single liquid crystal display panel 5 includes four source drivers 3, there is no limitation on the number of the source drivers 3 disposed on each of the liquid crystal display panels 5. The gate driver 2 and the plurality of source drivers 3 disposed on each of the liquid crystal display panels 5 may be mounted on each of the liquid crystal display panels 5 by the COG (Chip On Glass) technique for example. Each of the liquid crystal display panels 5 includes a substrate 7 connected to the gate driver 2 and the plurality of source drivers 3 disposed thereon. Although each of the substrate 7 has a common electrode potential setting section disposed thereon in order to make control such that the common electrode of its corresponding liquid crystal display panel 5 is set at a predetermined level, the common electrode potential setting section on each of the substrates is not shown in Fig. 1 for simplicity.

Furthermore, the liquid crystal display device according to this embodiment includes a single graphic controller 11 and a single timing controller 1. The graphic controller 11 and the timing controller 1 may be disposed on a substrate 12 different from each of the substrates 7 for example. The graphic controller 11 is connected to the timing controller 1, and the graphic controller 11 inputs image data into the timing controller 1.

As the technique for connecting the gate drivers 2 and the source drivers 3 to the liquid crystal display panels, the COF (Chip On Film) may be adopted to mount the respective drivers on the respective substrates 7.

In this embodiment, the single time controller 1 is connected to the respective source drivers 3 disposed for each of the liquid crystal display panels 5. In other words, the source drivers 3 of each of the liquid crystal display panels 5 are connected to the common timing controller 1. The timing controller 1 are preferably connected to the respective source drivers of each of the liquid crystal display panels 5 by a point-to-point system. In other words, the time controller 1 is preferably connected to the respective source drivers 3 by employing independent signal lines for the respective source drivers 3. Explanation of this embodiment will be made about a case where the connection between the timing controller 1 and the respective source drivers 3 is made by the point-to-point system.

Although it is shown in Fig. 1 for simplicity that the timing controller 1 is connected to one source driver 3 via a single signal line, the timing controller 1 is connected to one source driver 3 via two signal lines. The timing controller 1 employs two signal lines to input a signal or image data into one source driver 3 via two signal lines in a differential signaling system.

The timing controller 1 is also connected to the gate driver 2 disposed on each of the liquid crystal display panels 5. In other words, the gate driver 2 of each of the liquid crystal display panels 5 is connected to the common timing controller 1.

In accordance with the timing controller 1, the respective gate drivers 2 set the potential of a selected gate line at the selected-period potential and set the potential of a non-selected gate line at the non-selected-period potential, line-sequentially selecting the respective gate lines. When the potential of a selected gate line is set at the selected-period potential, the potential of the gates of the respective TFTs connected to the selected gate line is also set at a selected-period potential. As a result, conduction is establish between the source and the drain of these TFTs such that each of the pixel electrodes in the row corresponding to the selected gate line is set at a potential equal to that of the source line with it being arrayed therein. On the other hand, when the potential of a non-selected gate line is set at the non-selected-period potential, the potential of the gate of each of the TFTs connected to the non-selected gate line is also at a non-selected-period potential. As a result, no conduction is established between the source and the drain in each of these TFTs.

In this embodiment, the source drivers 3 of a liquid crystal display panel 5 are connected to some of the source lines of the liquid crystal display panel. In this embodiment, it is assumed for ease of explanation that one liquid crystal display panel 5 has 4·m source lines. It is also assumed that the j-th source driver from the left when viewed from a viewer side, among the four source drivers 3 corresponding to one liquid crystal display panel 5, is connected to the (m·(j-1)+1)-th to m·j-th source lines from the left when viewed from the viewer side, among the source lines of the one liquid crystal display panel 5. The source drivers 3 capture image data under the control of the timing controller 1. The source drivers 3 set the potential of the source lines connected to the source drivers 3 at potentials corresponding to the image data for the pixels in the row corresponding to a selected gate line.

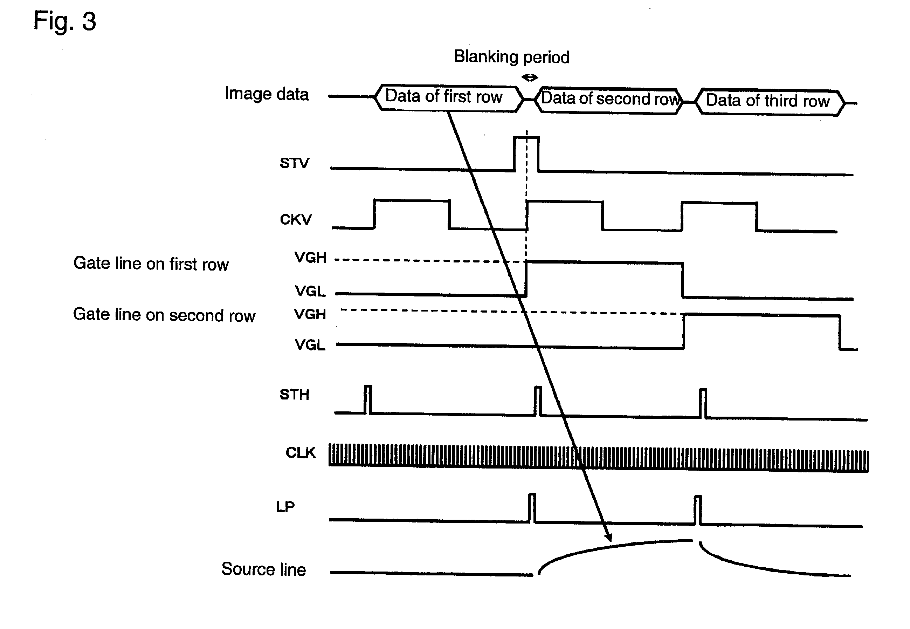

Fig. 3 is a timing chart showing an example of the input timing of e.g. signals from the timing controller 1 to a gate driver 2 or source drivers 3. The timing controller 1 inputs a control signal indicating the start of sequential selection from the gate line in the first row (hereinbelow, referred to as STV) and a clock signal indicating the switch of a selected row to the next selected row (hereinbelow, referred to as CKV) into each of the gate drivers 2. STV is also called a gate start pulse, and CKV is also called a gate shift pulse. When the timing controller 1 indicates each gate driver 2 to start sequential selection from the gate line in the first row, the timing controller raises STV to a high level and raises CKV to a high level in duration where STV is at a high level, followed by setting STV to a low level (see Fig. 3). Further, the timing controller 1 periodically repeats control to set CKV at a high level and then to set CKV at a low level. When each of the gate drivers 2 detects a rising edge of CKV in duration where STV is at a high level, each of the gate drivers selects the gate line in the first row. After that, whenever each of the gate drivers detects the rising edge of CKV, each of the gate drivers sequentially selects the gate lines in the second row and its subsequent rows (see Fig. 3). It should be noted that the state that the potential of a gate line is set at VGH means that this gate line is selected.

The timing controller 1 also inputs a control signal indicating the start of capture of image data in one row (hereinbelow, referred to as STH), a clock signal indicating the capture of one pixel data in the one row (hereinbelow, referred to as CLK), and a control signal indicating the output of potentials according to the captured image data (hereinbelow, referred to as LP) into the respective source drivers 3. STH is also called a source start pulse, CLK is also called a dot clock and LP is also called a latch pulse.

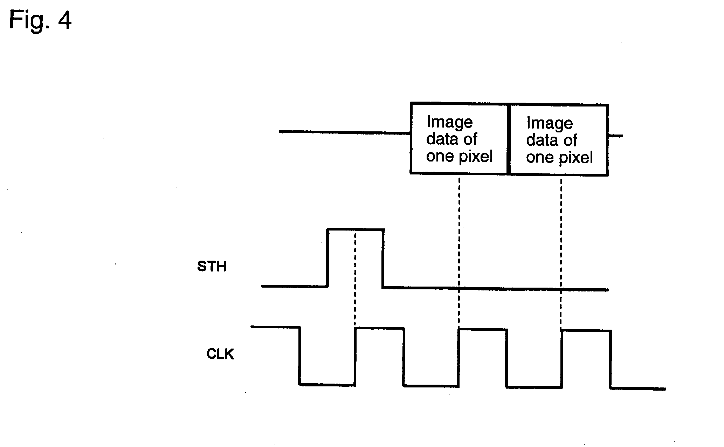

Fig. 4 is a timing chart showing details of the input timing of STH and CLK to a source driver 3. When the timing controller 1 indicates a source driver 3 to start the capture of image data in one row, the timing controller sets STH at a high level, raises CLK to a high level in duration where STH is at a high level, followed by setting STH to a low level (see Fig. 4). Further, the timing controller 1 periodically repeats control to set CLK at a high level and then set CLK at a low level. When a source driver 3 detects a rising edge of CLK in duration where STH is at a high level, whenever the source driver detects a rising edge of CLK after the next rising edge of CLK, the source driver captures image data of every one pixel (see Fig. 4). The timing controller 1 also periodically raises STH to a high level as shown in Fig. 3

In duration from a falling edge to a rising edge of STH, the timing controller 1 inputs the image data in the row corresponding to a next selected gate line and in columns corresponding to the source lines connected to the source drivers 3 into the respective source drivers 3. For example, the image data of the pixels from the (m·(j-1)+1)-th to m·j-th from the left when viewed from the viewer side, among the image data of the row corresponding to a next selected gate line, is input into the j-th source driver 3 from the left when viewed from the viewer side. The source drivers 3 capture input image data in synchronization with CLK.

Furthermore, the timing controller 1 raises LP to a high level at the start of a selection period so as to correspond to the selection periods of the respective gate lines and then to fall LP to a low level for the source drivers 3 (see Fig. 3). When the source drivers 3 detect a rising edge of LP, the potentials of the respective source lines connected to the source drivers 3 are set at potentials according to captured image data. As a result, the potentials of the respective source lines change to the potentials according to the image data of the pixels of the columns of the respective source lines in the selected row. It should be noted that only a change in potential of a single source line is schematically shown in Fig. 3.

Furthermore, the timing controller 1 causes the source drivers 3 to capture the image data of a row, followed by causing the gate drivers 2 to select the gate line of the row and the source drivers 3 to set the source lines at potentials corresponding to the image data. For example, as shown in Fig. 3, the timing controller 1 first causes the source drivers 3 to capture the image data of the first row in one frame. After that, the timing controller 1 causes the gate drivers 2 to select the gate line of the first row and the source drivers 3 to set the potentials of the source lines at potentials corresponding to the captured image data (the image data of the first row). At that time, the timing controller 1 also causes the source drivers 3 to capture the image data of the second row.

It should be noted that the timing controller 1 sets a blanking period (a period where no image data is input) after input of the image data of a row and before input of the image data of the next row. The timing controller 1 raises and falls LP and subsequently raises and falls STH in each blanking period (see Fig. 3).

The graphic controller 11 generates the image data representing an image displayed on the respective liquid crystal display panels 5 and inputs the image data generated for the respective liquid crystal display panels 5 into the timing controller 1. The timing controller 1 inputs the image data generated for the respective liquid crystal display panels 5 into the source drivers 3 of the liquid crystal display panels corresponding to the image data.

The graphic controller 11 generates the image data representing an image displayed on the respective liquid crystal display panels 5 such that various kinds of character information or image information input from an external system (not shown) are displayed at predetermined positions for example. It should be noted that this image generation is one example and that there is no particular limitation to how the graphic controller 11 generates the image data representing an image displayed on the respective liquid crystal display panels 5. Explanation will be made about a case where the image data representing a horizontally long image is input, and the graphic controller 11 divides the image data in the same number of sections as the number of the liquid crystal display panels 5 (four in this case) to generate the image data corresponding to the respective liquid crystal display panels 5. It should be noted that a horizontally long image may be supplied to the liquid crystal display panels 5 without being divided since the plurality of liquid crystal display panels 5 are controlled by the single timing controller in the present invention.

Now, the operation of the liquid crystal display device will be described.

In this case, it is assumed that the image data representing a horizontally long image showing a displayed object 91 is input into the graphic controller 11. The graphic controller 11 divides the image data to produce four divided pieces of image data representing four divided images 95a to 95d and inputs the respective divided pieces of image data into the timing controller 1.

In a frame showing the four divided images 95a to 95d, the timing controller 1 inputs the image 95a into the respective source drivers 3 of the first liquid crystal display panel 5 from the left, inputs the image 95b into the respective source drivers 3 of the second liquid crystal display panel 5 from the left, inputs the image 95c into the respective source drivers 3 of the third liquid crystal display panel 5 from the left and inputs the image 95d into the respective source drivers 3 of the fourth liquid crystal display panel 5 from the left. The operation of the present invention will be described in reference to this frame as an example.

The timing controller 1 periodically changes CLK as shown in Fig. 4 and inputs CLK into the source drivers 3 of the respective liquid crystal display panels 5. In the frame showing the respective images 95a to 95d, the timing controller 1 sets STH at a high level, to set CLK at a high level in duration where STH is at a high level, and to set STH at a low level for the source drivers 3 of the respective liquid crystal display panels 5. As a result, the image data input from the timing controller 1 are captured one pixel by one pixel into the respective source drivers 3 at respective rising edges of CLK including the next rising edge of CLK.

In that time, the timing controller 1 inputs the image data of the first row and the column corresponding to the source lines connected to the source drivers 3 into the respective source drivers 3 in duration where STH is at a low level. It should be noted that the timing controller 1 inputs the image data representing the first row of the image 95a into the respective source drivers 3 of the first liquid crystal display panel 5 from the left, inputs the image data representing the first row of the image 95b into the respective source drivers 3 of the second liquid crystal display panel 5 from the left, inputs the image data representing the first row of the image 95c into the respective source drivers 3 of the third liquid crystal display panel 5 from the left and inputs the image data representing the first row of the image 95d into the respective source drivers 3 of the fourth liquid crystal display panel 5 from the left.

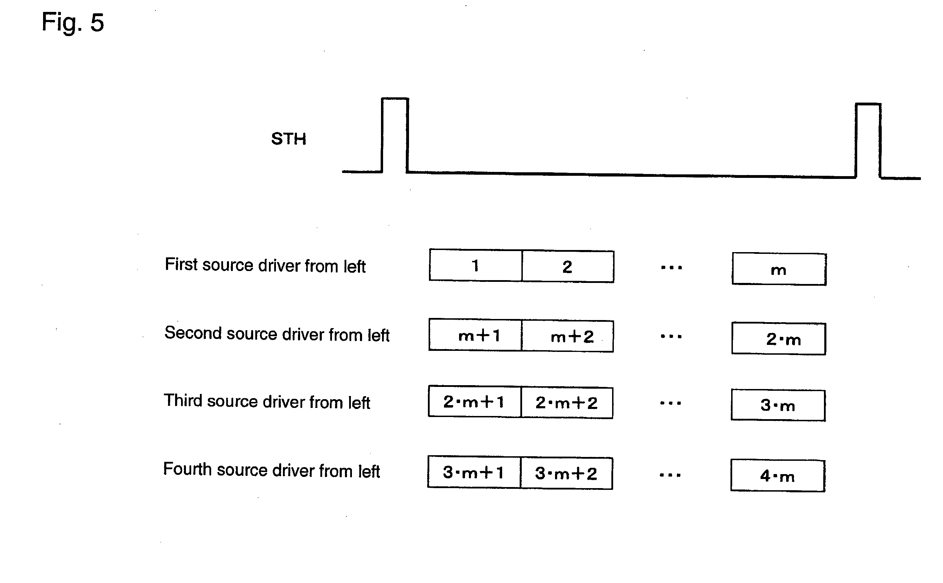

Fig. 5 is a schematic diagram showing an example of timing that image data is captured by the source drivers. For example, image data that is located in a next selected row and represents the respective pixels from the first column to the m-th column from the left in each of the liquid crystal display panels 5 is input into the first source driver 3 from the left in each of the liquid crystal display panels 5 by the timing controller 1.

Further, image data that is located in the next selected row and represents the respective pixels from the (m+1)-th column to the 2·m-th column from the left in each of the liquid crystal display panels 5 is input into the second source driver 3 from the left in each of the liquid crystal display panels 5 by the timing controller 1.

Further, the image data that is located in the next selected row and represents the respective pixels from the (2·m+1)-th column to the 3·m-th column from the left in the liquid crystal display panels 5 is input into the third source driver 3 from the left in each of the liquid crystal display panels 5 by the timing controller 1.

Further, the image data that is located in the next selected row and represents the respective pixels from the (3·m+1)-th column to the 4·m-th column from the left in each of the liquid crystal display panels 5 is input into the fourth source driver 3 from the left in each of the liquid crystal display panels 5 by the timing controller 1.

As shown in Fig. 4, the respective source drivers 3 captures the image data of one pixel input from the timing controller 1 and holds the image data at respective rising edges of CLK after lapse of duration where STH is at a high level.

Thus, the four source drivers 3 in each of the liquid crystal display panels 5 first hold the image data in the first row and the first column, the image data in the first row and the (m+1)-th column, the image data in the first row and the (2·m+1)-th column and the image data in the first row and the (3·m+1)-th column in a synchronized manner (see Fig. 5). Subsequently, the four source drivers 3 in each of the liquid crystal display panels 5 hold the image data in the first row and the second column, the image data in the first row and the (m+2)-th column, the image data in the first row and the (2·m+2)-th column and the image data in the first row and the (3·m+2)-th column in a synchronized manner. Thereafter, the four source drivers 3 in each of the liquid crystal display panels 5 likewise sequentially hold the image data of one pixel by one pixel in a synchronized manner. Finally, the four source drivers in each of the liquid crystal display panels hold the image data in the first row and the m-th column, the image data in the first row and the 2·m-th column, the image data in the first row and the 3·m-th column and the image data in the first row and the 4·m-th column in a synchronized manner in a period before the next rising edge of STH.

When the timing controller 1 inputs STH and CLK into the respective source drivers 3, the timing controller 1 inputs STH and CLK into the respective source drivers 3 in a synchronized manner, respectively. Thus, the timing of the rising edge of STH and the timing of the falling edge of STH are common to the respective source drivers 3, and the timing of the rising edge of CLK and the timing of the falling edge of CLK are also common to the respective source drivers 3. Likewise, the timing controller 1 inputs LP into the respective source drivers 3 in a synchronized manner. In other words, the timing of the rising edge of LP and the timing of the falling edge of LP are common to the respective source drivers 3.

The timing controller 1 periodically changes CKV as shown in Fig. 3 and inputs CKV into the gate drivers 2 of the respective liquid crystal display panels 5. The timing controller 1 causes the respective source drivers 3 to capture the image data in the first row, followed by causing the gate drivers 2 of the respective liquid crystal display panels 5 to set STV at a high level, to set CKV at a high level in duration where STV is at a high level, and to set STV at a low level. The timing controller 1 makes control such that the rising edge of CKV in duration where STV is at a high level is contained in a blanking period.

When the timing controller 1 inputs STV and CKV into the respective gate drivers 2, the timing controller 1 inputs STV and CKV into the respective gate drivers in a synchronized manner, respectively. Thus, the timing of the rising edge of STV and the timing of the falling edge of STV are common to the respective gate drivers 2, and the timing of the rising edge of CKV and the timing of the falling edge of CKV are also common to the respective gate drivers 2.

When the respective gate drivers 2 detect a rising edge of CKV in duration where STV is at a high level, the gate drivers select the gate lines in the first row. In other words, the gate lines in the first row are set at the selected-period potential while the gate lines in the other rows are set at the non-selected-period potential. Since STV and CKV are input into the respective gate drivers 2 in a synchronized manner, the respective gate drivers 2 simultaneously select the gate lines in the first row. It should be noted that a common signal may be supplied to the respective gate drivers 2 since only the single timing controller is disposed. It is possible to eliminate the need to purposely realize synchronization between the respective gate drivers by supply of a common signal.

Subsequently, the timing controller 1 causes LP input into the respective source drivers 3 to set at a high level and to return to a low level in a blanking period.

Furthermore, in a blanking period, the timing controller 1 causes the respective source drivers 3 to set STH at a high level, to set CLK at a high level in duration where STH is at a high level, and to set STH at a low level. The control of STH and CLK is the same as the control of STH and CLK at a start of a frame.

When the respective source drivers 3 detect a falling edge of a latch pulse, the respective source drivers set the potentials of the respective source lines connected thereto at potentials according to the image data of the respective pixels held therein. At that time, the respective source drivers 3 set the potentials of the respective source lines connected thereto at potentials according to the image data in the first row. As a result, the individual pixel electrodes in the first row are respectively set at potentials according to the image data in the first row that is the image data of pixels corresponding to the individual pixel electrodes. In the respective liquid crystal display panels 5, voltages are applied across portions of the liquid crystal between the individual pixel electrodes in the first row and the common electrode 30 (see Fig. 2) according to the pixel data in the first row, resulting the respective liquid crystal display panels 5 to display respective images 95a to 95d as the image in the first row.

After the timing controller 1 sets STH at a low level, the timing controller inputs the image date in the second row into the respective source drivers 3. When the respective source drivers 3 detect a rising edge of CLK in duration where STH is at a high level, whenever the respective source drivers 3 detect a rising edge of CLK after a rising edge of the next CLK, the respective source drivers capture image data one pixel by one pixel and hold the image data. At that time, the respective source drivers capture the image data in the second row one pixel by one pixel and hold the image data. The operation of the respective source drivers 3 is the same as that of the respective source drivers when the image data in the first row is captured.

Then, after the timing controller 1 causes the respective source drivers 3 to capture the image data in the second row, the timing controller causes the gate drivers 2 of the respective liquid crystal display panels 5 to set STV at a high level, to set CKV at a high level in duration where STV is at a high level and to set STV at a low level. Thus, the respective gate drivers 2 select the gate lines in the second row. It should be noted that the timing controller 1 makes control such that the rising edge of CKV in duration where STV is at a high level is contained in a blanking period.

Subsequently, in a blanking period, the timing controller 1 sets LP input into the respective source drivers 3 at a high level and returns LP to a low level. When the respective source drivers 3 detect a falling edge of a latch pulse, the respective source drivers set the potentials of the respective source lines connected thereto at potentials according to the image data of the respective pixels held therein.

As a result, the respective liquid crystal display panels 5 display portions of the respective images 95a to 95d in the second row.

Furthermore, in a planking period, the timing controller 1 sets STH at a high level, sets CLK at a high level in duration where STH is at a high level and returns STH to a low level for the respective source drivers 3.

Thereafter, the respective pixel electrodes in the respective rows are set at the potentials according to the image data corresponding to the respective pixel electrodes by repeating similar operation. When the selection period for the last row ends, the respective liquid crystal display panels 5 are placed in a state that the image 95a to the image 95d are displayed.

A user can grasp the entire image of the displayed object 91 by watching the four liquid crystal display panels 5.

Although explanation has been made about the case where the single displayed object 91 is displayed as a whole on the plurality of liquid crystal display panels 5, the respective liquid crystal display panels 5 may individually display different contents.

In accordance with the present invention, the respective gate drivers 2 and the respective source drivers 3 disposed on the plurality of liquid crystal display panels 5 are connected to the single timing controller 1, and the single timing controller 1 controls the respective gate drivers 2 and the respective source drivers 3. Accordingly, it is possible to reduce the production cost since the control of the respective liquid crystal display panels 5 by the single timing controller 1 can reduce the number of the timing controller 1.

It is also possible to perform synchronized operation among the gate drivers 2 of the liquid crystal display panels 5 and among the source drivers 3 of the liquid crystal display panels 5 since the single timing controller 1 controls the respective gate drivers 2 and the respective source drivers 3. In other words, it is possible to perform synchronized operation in each of a combination of the liquid crystal display panels 5, a combination of the gate drivers 2 and a combination of the source drivers 3.

By adopting a point-to-point system as the connection method between the timing controller 1 and the respective source drivers 3, it is sufficient that the number of signal lines required between a source driver 1 and the timing controller 1 is two. Thus, it is possible to reduce the number of the required signal lines.

Although Fig. 1 shows a case where the graphic controller 11 and the timing controller 1 are independently disposed, the graphic controller 11 and the timing controller 1 may be realized in the form of a single IC (Integrated Circuit). For example, the timing controller 1 may be incorporated into an IC performing as the graphic controller 11.

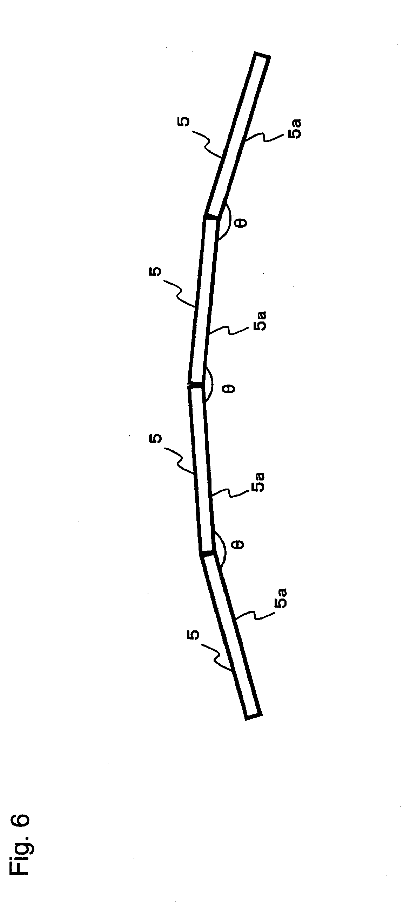

The respective liquid crystal display panels 5, which are disposed in a row in a lateral direction, may be configured so as to be disposed such that the angle formed by adjacent liquid crystal display panels 5 is 180 degrees. Or, the respective liquid crystal display panels 5 may be configured so as to be disposed such that the angle formed by adjacent liquid crystal display panels 5 is less than 180 degrees. Fig. 6 is a top plan view showing a plurality of liquid crystal display panels 5 in a case where the liquid crystal display panels 5 are disposed such that the angle formed by the display screens of adjacent liquid crystal display panels 5 is less than 180 degrees. In Fig. 6, θ represents the angle formed by the display screens 5a of adjacent liquid crystal display panels 5. The screen realized by the entire liquid crystal display panels 5 can be regarded as having a curved face by disposing the liquid crystal display panels 5 such that the angle θ formed by the display screens 5a of adjacent liquid crystal display panels 5 is less than 180 degrees as shown in Fig. 6.

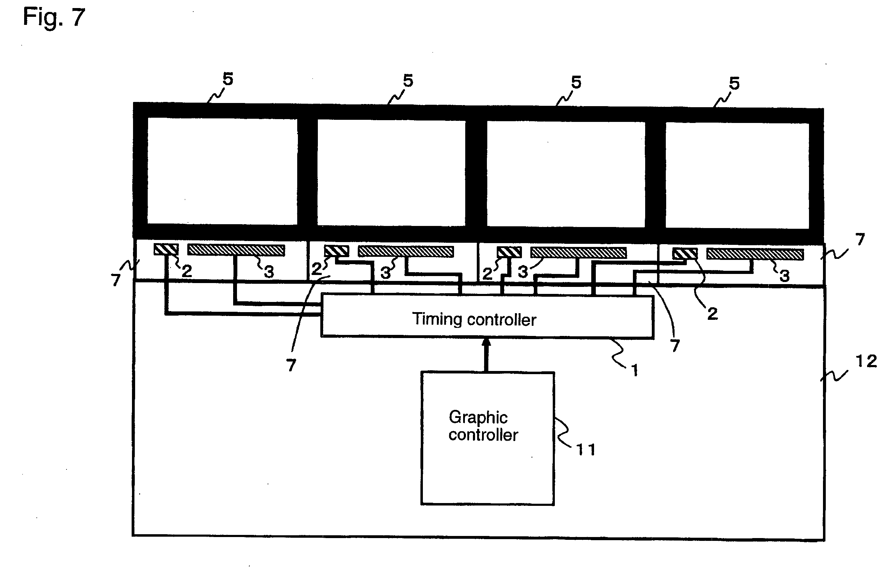

Now, explanation will be made about a preferred example where the respective liquid crystal display panels 5 are disposed such that the angle formed by the display screens of adjacent liquid crystal display panels 5 is less than 180 degrees as a modified embodiment of the present invention. Fig. 7 is a block diagram showing such a preferred example. In this figure, the constituent elements identical to the constituent elements shown in Fig. 1 are denoted by the same reference numerals as those in Fig. 1, and the explanation for these constituent elements will be omitted.

The liquid crystal display panels 5 shown in Fig. 7 are disposed such that the angle θ formed by the display screens 5a of adjacent liquid crystal display panels 5 is less than 180 degrees as shown in Fig. 6. When a single liquid crystal display panel 5 has such a large width that it is required to be driven by a plurality of source drivers 3, it is difficult for the entire screen formed by combining the respective liquid crystal display panels 5 to be regarded as having a curved face because each liquid crystal display panel has a wide flat portion. For this reason, in this modified example, it is preferred that each liquid crystal display panel have a width enough to be driven by a single source driver 3. Fig. 7 exemplifies a case where a single source driver 3 is disposed for each liquid crystal display panel 5.

A single source driver 3 corresponding to a single liquid crystal display panel 5 is connected to the respective source lines of the single liquid crystal display panel 5. For this reason, each of the source drivers 3 shown in Fig. 7 reads image data of the respective pixels in one row in duration from a falling edge to a rising edge of STH (see Fig. 3) and sets the potentials of the respective source lines according to the potentials corresponding to the image data in the selection period thereafter. As described above, the source drivers 3 shown in Fig. 7 are different from the source drivers in the configuration shown in Fig. 1 in that the source driver of each liquid crystal display panel 5 is connected to the respective source lines of the liquid crystal display panel 5 and sets the respective source lines at the potentials, The source drivers 3 shown in Fig. 7 otherwise are the same as those in the configuration shown in Fig. 1.

The operation of the gate drivers 2 and the operation of the timing controller 1 for controlling the respective gate drivers 2 and the respective source drivers 3 are also the same as those of the gate drivers 2 and the timing controller 1 in the configuration shown in Fig. 1. The operation of the graphic controller 11 is also the same as that of the graphic controller 11 in the configuration shown in Fig. 1.

The timing controller 1 may be connected to the respective source drivers 3 by a point-to-point system.

In order to reduce the number of signal lines required for connection with the gate drivers 2 such that a module containing a liquid crystal display panel 5, a gate driver 2 and a source driver 3 can have a narrow width, each of the gate drivers 2 may be configured as a panel-built-in gate driver.

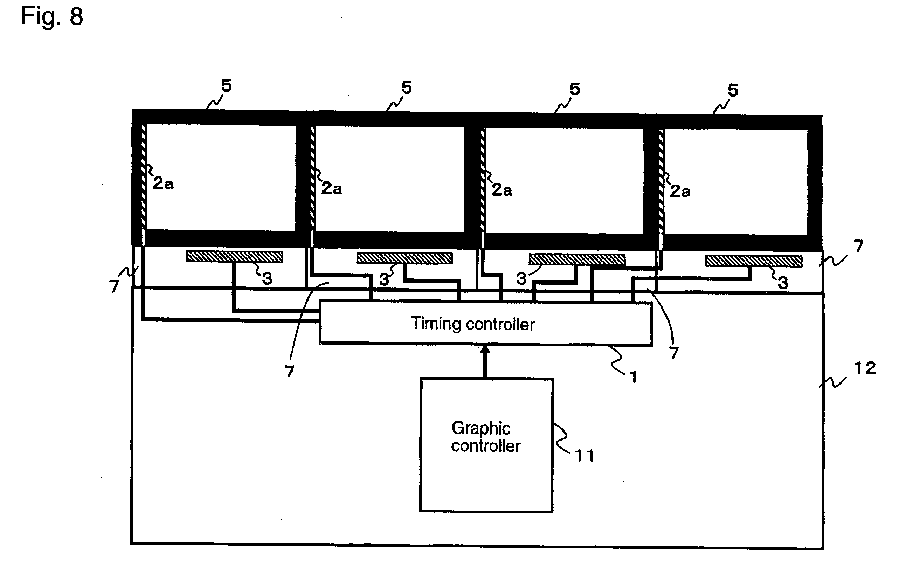

Fig. 8 shows a configuration example where panel-build-in gate drivers are used. In this figure, the constituent elements identical to the constituent elements shown in Fig. 7 are denoted by the same reference numerals as those in Fig. 7, and the explanation of these constituent elements will be omitted.

The configuration shown in Fig. 8 is different from the configuration shown in Fig. 7 in that the respective liquid crystal display panels 5 have built-in gate drivers 2a, instead of the gate drivers 2 shown in Fig. 7, disposed therein as the gate drivers corresponding to the respective liquid crystal display panels 5.

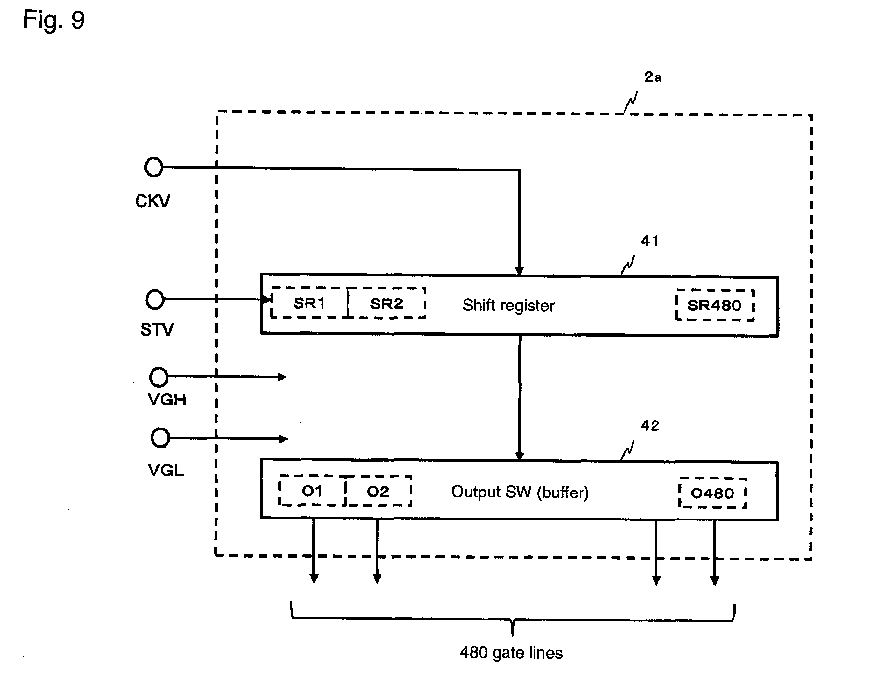

The built-in gate drivers 2a perform the same operation as that of the gate drivers 2 and line-sequentially select the gate lines of the liquid crystal display panels 5 under the control of the timing controller 1. Fig. 9 is a schematic diagram showing a configuration example of a built-in gate driver. The built-in gate driver 2a includes a shift register 41 and an output switch (buffer) 42.

The shift register 41 includes signal output parts SR1 to SR480 for outputting a signal indicating selection. Explanation will be made about a case where the number of gate lines is 480. In this case, the shift register 41 receives STV and CKV as input (see Fig. 3). When the shift register 41 detects a rising edge of CKV in duration where STV is at a high level, the shift register outputs a signal indicating selection from a signal output part SR1. After that, whenever the shift register 41 detects a rising edge of SKV, the shift register sequentially outputs signals indicating selection, switching the signal output parts from one to another. In other words, when the shift register detects a rising edge of CKV in duration where STV is at a high level, the shift register outputs a signal indicating selection from the signal output part SR1, followed by sequentially outputting signals indicating selection from the signal output parts SR2, SR3, ..., SR480 in this order whenever the shift register detects a rising edge of CKV.

The output switch 42 includes potential output parts O1 to 0480 corresponding to the signal output parts SR1 to SR480 in a one-to-one relationship. The potential output parts O1 to 0480 are connected to the 480 gate lines of the liquid crystal display panels 5 (not shown in Fig. 9) in a one-to-one relationship. The output switch 42 receives a selected-period potential VGH and a non-selected-period potential VGL as inputs from an external power supply (not shown). When each of the potential output parts O1 to 0480 receives a signal indicating selection as input from their corresponding signal output part, the potential of their corresponding gate line is set at the selected-period potential VGH. When no signal indicating selection is input, the potential of their corresponding gate line is set at the non-selected-period potential VGL.

Such arrangement allows the built-in gate driver 2a to sequentially select the respective gate lines. Since it is possible to minimize the number of the wires required for inputting a signal or potential into the built-in gate driver 2a in the arrangement shown in Fig. 9, it is possible to reduce the width of the respective modules, each of which includes a source driver 3 and a liquid crystal display panels 5 containing an built-in gate driver 2a (see Fig. 8).

In the configurations shown in Figs. 7 and 8, the respective liquid crystal display panels 5 are disposed such that the angle θ formed by the display screens of adjacent liquid crystal display panels 5 is less than 180 degrees (see Fig. 6). Thus, the screen realized by the entire liquid crystal display panels 5 can be regarded as being a curved face by a user.

By adjusting the angle θ (see Fig. 6), the radius of curvature of the curved face can be set as desired.

In particular, when the liquid crystal display panels 5 are configured to be driven by use of a single source driver, the horizontal width of the liquid crystal display panels 5 can be made narrower, resulting the screen formed by the entire liquid crystal display panels 5 to look more like a curved face.

When the gate drivers are configured by employing built-in gate drivers 2a including a shift register 41 and an output switch 42, it is possible to minimize the number of the wires required for the built-in gate drivers 2a, resulting the horizontal width of each liquid crystal display panels 5 to be made narrower. Thus, the screen formed by the entire liquid crystal display panels 5 can look more like a curved face. It is also possible to improve the degree of freedom in the curvature of the curved face.

In the liquid crystal display device shown in Fig. 10, it is possible to make the screen of the liquid crystal display panel 65 a curved face by forming the glass substrate of the liquid crystal display panel 65 in a thin shape and mechanically curving the glass substrate. Or, it is possible to make the liquid crystal display panel 65 bendable by disposing TFTs on a film when producing the liquid crystal display panel 65 shown in Fig. 10. It is, however, difficult to uniformly control the cell gap when an attempt is made to realize a curved face by mechanically bending the liquid crystal display panel as described above. Further, when the glass substrate is formed in a thin shape so as to be bendable, the polarizers are made thicker than the glass substrate with the result that it is impossible to secure a constant curvature because there is a difference in the degree of shrinkage between the polarizers and the glass substrate with respect to a change in temperature. Furthermore, there is a limitation to mechanical bending of a liquid crystal display panel to which the COG technique is applicable.

As described above, various problems are caused when an attempt is made to realize a curved face by mechanically bending a liquid crystal display panel itself. To the contrary, in the embodiments of the present invention exemplified in Figs. 7 and 8, a user apparently observes a curved screen by disposing the respective liquid crystal display panels 5 such that the angle θ formed by the display screens 5a of adjacent liquid crystal display panels 5 is less than 180 degrees (see Fig. 6). Thus, the liquid crystal display device according to the present invention is free from such problems unlike a case where a liquid crystal display panel is mechanically bent. Accordingly, the present invention can realize a liquid crystal display device which is highly reliable and excellent in yield and production cost.

Although the above explanation has been made in about a case where liquid crystal display panels 5 with TFTs are employed, the respective liquid crystal display panels 5 disposed in a row may be ones driven by a transverse electric field. The respective liquid crystal display panels 5 may be disposed not only in a lateral direction but also in a vertical direction.

### INDUSTRIAL APPLICABILITY

The liquid crystal display device according to the present invention is available in e.g. a case where a screen having a wide width in a horizontal direction can be observed by a user. For example, the liquid crystal display device according to the present invention can be applicable to, e.g., a case where a screen having a width substantially equal to the windshield of a vehicle is realized in a lower part or in the vicinity of a lower part of the windshield such that a user can observe an image on the screen.

The entire disclosure of Japanese Patent Application No. 2011-106639 filed on May 11, 2011 including specification, claims, drawings and summary is incorporated herein by reference in its entirety.

## Claims

1. A liquid crystal display device comprising:
a plurality of liquid crystal display panels including source lines disposed along columns of pixels arranged in a matrix pattern and gate lines disposed along rows of the pixels arranged in the matrix pattern;
the plurality of liquid crystal display panels being disposed in a row in one direction;
each of the liquid crystal display panels including a gate driver for selecting respective gate lines and at least one source driver for setting the potentials of the respective source lines; and
a single timing controller for controlling the respective gate drivers and the respective source drivers corresponding to the plurality of liquid crystal display panels.

2. The liquid crystal display device according to Claim 1, wherein the timing controller is connected to the respective source drivers via independent signal lines.

3. The liquid crystal display device according to Claim 1 or 2, wherein the plurality of liquid crystal display panels are configured so as to be disposed such that the angle formed by adjacent liquid crystal display panels is less than 180 degrees.

4. The liquid crystal display device according to Claim 3, wherein each of the liquid crystal display panels includes a single source driver.

5. The liquid crystal display device according to Claim 3 or 4, wherein the gate driver disposed for each of the liquid crystal display panels comprises a built-in gate driver, which is disposed in each of the liquid crystal display panels and which includes a shift register and an output switch.
